Europäisches Patentamt

**European Patent Office**

**Office européen des brevets**

(19)

(11) Veröffentlichungsnummer: **0 025 4**

**A1**

(12) **EUROPÄISCHE PATENTANMELDUNG**

(21) Anmeldenummer: **80104015.5**

(22) Anmeldetag: **11.07.80**

(51) Int. Cl.³: **C 08 G 18/54, C 08 G 18/14**

(30) Priorität: **07.09.79 DE 2936299**

(43) Veröffentlichungstag der Anmeldung: **25.03.81**
**Patentblatt 81/12**

(84) Benannte Vertragsstaaten: **AT BE CH DE FR GB IT LI NL SE**

(71) Anmelder: **CHEMIE LINZ AKTIENGESELLSCHAFT, St. Peter-Strasse 25, A-4020 Linz (AT)**

(84) Benannte Vertragsstaaten: **BE CH FR GB IT LI NL SE A**

(71) Anmelder: **Lentia Gesellschaft mit beschränkter Haftung, Schwanthalerstrasse 39 Postfach 20 16 26, D-8000 München 2 (DE)**

(84) Benannte Vertragsstaaten: **DE**

(72) Erfinder: **Golser, Leopold Dipl.-Ing. Dr., Spitzgärtlstrasse 6/1, A-4060 Leonding (AT)**
Erfinder: **Woisetschläger, Helmut, Baumgärtelstrasse 11, A-4045 Linz (AT)**

(54) **Verfahren zur kontinuierlichen Herstellung von Schaumkunststoffen mit verbessertem Brandverhalten und Vorrichtung dessen Durchführung.**

(57) Kontinuierliches Verfahren zur Herstellung von Schaumkunststoffen durch Kondensation von wasserhaltigen Aminoplastvorkondensaten mit Di- oder Polyisocyanaten, wobei in einer ersten Mischstufe das Isocyanat mit 4–14 Gew.% an Katalysator, der ein organisches Amin und gegebenenfalls eine organische Metallverbindung ist, bei einer Verweilzeit von 1 bis 8 Sekunden und Temperaturen von 40–130°C gemischt wird, worauf unmittelbar darauf in einer zweiten Mischstufe das Aminoplastvorkondensat und gleichzeitig, aber getrennt vom Aminoplast, ein saurer Härtungskatalysator eingemischt werden, worauf das dabei entstehende schaumfähige Gemisch kontinuierlich ausgetragen wird. Die Vorrichtung hiezu besteht aus zwei hintereinandergeschalteten Mischkammern (1) und (2), von denen die Mischkammer (1) kühlbar ist, wobei die Mischkammern über eine Düse (10) verbunden sind, deren Querschnitt an der engsten Stelle sich zur Summe der Querschnitte der Zuleitungen (3, 4, 5, 6) zur Mischkammer (1) wie 0,3–0,9:1 verhält.

## Verfahren zur kontinuierlichen Herstellung von Schaumkunststoffen mit verbessertem Brandverhalten und Vorrichtung zu dessen Durchführung

Die vorliegende Erfindung betrifft ein kontinuierliches Verfahren zur Herstellung von Schaumkunststoffen, die durch Reaktion von Di- oder Polyisocyanaten mit Aminoplastvorkondensaten entstehen und ein verbessertes Brandverhalten aufweisen sowie eine Vorrichtung zur Durchführung des Verfahrens.

In der AT-PS 347 697 ist ein Verfahren zur Herstellung von Schaumkunststoffen mit verbessertem Brandverhalten beschrieben, bei dem wasserhältige Aminoplastvorkondensate und deren Vorstufen mit mindestens bifunktionellen organischen Isocyanaten in Gegenwart von Säuren zur Härtung der Aminoplastvorkondensate und organischen Aminen und gegebenenfalls organischen Metallverbindungen zur Katalyse der Reaktion des Polyisocyanates mit Wasser und den Hydroxylgruppen der im Reaktionsgemisch vorhandenen, organischen Verbindungen kondensiert werden. Dabei ist es wesentlich, daß das wasserlösliche Aminoplastvorkondensat in wässeriger Lösung gleichzeitig mit, aber getrennt von den sauren Härtungskatalysatoren, dem Polyisocyanat zugesetzt wird, dem vorher das Amin und gegebenenfalls die organische Metallverbindung zugesetzt worden ist, wobei das Polyisocyanat im Verhältnis zum Wasser in einer Menge zugegen ist, die gleichzeitig eine Vernetzung mit den Methylolgruppen des Aminoplastvorkondensates bzw. dessen Vorstufen gestattet.

Bei dem Versuch, dieses Verfahren in optimaler Weise kontinuierlich durchzuführen, treten jedoch gewisse Schwierigkeiten auf. Diese hängen im wesentlichen damit zusammen,daß die Herstellung des Voradduktes aus dem organischen Polyisocyanat und dem basischen Katalysator (vor allem den hydroxylgruppenhaltigen Aminen) infolge der hohen Reaktionsgeschwindigkeit, der großen Reaktionswärme und des damit verbundenen raschen Viskositätsanstieges des gebildeten Voradduktes außerordentlich schwierig ist. Bekanntlich wird bei Polyurethanschaumstoffen der basische Katalysator zunächst dem Polyol zugesetzt und erst dann, auf diese Weise verdünnt, dem organischen Isocyanat zugeführt. Aufgrund der speziellen Natur des Verfahrens nach der genannten AT-PS muß der basische Katalysator dem organischen Polyisocyanat direkt zugesetzt werden und zwar in, bezogen auf das Polyisocyanat, zwangsläufig außerordentlich hohen Konzentrationen von bis zu 14 Gew.%. Die Folge dieser Maßnahme kann eine vorzeitige Gelierung des sich bildenden Voradduktes sein, die eine kontinuierliche Herstellung der Schaumstoffe verhindert, weil die üblichen Verschäumvorrichtungen rasch verstopft werden. Die reibungslose Produktion eines einwandfreien Produktes ist damit unmöglich.

Überraschenderweise wurde nun gefunden, daß sich die oben geschilderten Nachteile vermeiden lassen, wenn man das Verfahren in zwei definierten Stufen durchführt und die Zusammenführung des Polyisocyanates und des basischen Katalysators bzw. der organischen Metallverbindung in der ersten Mischstufe unter ganz bestimmten Temperaturen und bei bestimmten Verweilzeiten vornimmt.

Gegenstand der vorliegenden Erfindung ist demnach ein Verfahren zur kontinuierlichen Herstellung von Schaumkunststoffen mit verbessertem Brandverhalten durch Kondensation von wasserhältigen Aminoplastvorkondensaten und deren Vorstufen mit mindestens bifunktionellen organischen Isocyanaten in Gegenwart von Säuren zur Härtung der Aminoplastvorkondensate und organischen Aminen und gegebenenfalls organischen Metallverbindungen zur Katalyse der Reaktion des Polyisocyanates mit Wasser und den Hydroxylgruppen der im Reaktionsgemisch vorhandenen organischen Verbindungen, wobei ein wasserlösliches Aminoplastvorkondensat bzw. dessen Vorstufen in wässeriger Lösung gleichzeitig mit, aber getrennt von den sauren Härtungskatalysatoren, dem Polyisocyanat zugesetzt wird, dem vorher das Amin und gegebenenfalls die organische Metallverbindung zugesetzt worden ist, wobei das Polyisocyanat im Verhältnis zum Wasser in einer Menge zugegen ist, die gleichzeitig eine Vernetzung mit den Methylolgruppen des Aminoplastvorkondensates bzw. dessen Vorstufen gestattet, das dadurch gekennzeichnet ist, daß in einer ersten Mischstufe der basische Katalysator und gegebenenfalls die organische Metallverbindung in Mengen von 4 - 14 Gew.% bezogen auf die Polyisocyanatmenge dieser zugesetzt wird, wobei die Verweilzeiten des zwischen dem Katalysator und dem organischen Polyisocyanat sich bildenden Voradduktes in der ersten Mischstufe 1 bis 8 Sekunden bei Reaktionstemperaturen von 40 - 130°C betragen, worauf diesem nach unmittelbarer Überführung in die anschließende zweite Mischstufe das Aminoplastvorkondensat und der saure Katalysator zudosiert werden, worauf das schaumfähige Reaktionsgemisch kontinuierlich ausgetragen wird. Die dem Polyisocyanat in der Mischstufe 1 beizumischenden Katalysatormengen, bevorzugt 6 - 12 Gew.%, werden zweckmäßig so bemessen, daß sie, bezogen auf ihre jeweilige Basizität, im Unterschuß gegenüber den der Mischstufe 2 zugesetzten Mengen an saurem Katalysator sind. Im übrigen wird durch Erhöhung des Überschusses an saurem Katalysator, falls erforderlich, die Aushärtungszeit des resultierenden Schaumstoffes wesentlich verkürzt.

Die Verweilzeit in der 1. Mischstufe beträgt bevorzugt 1 - 5 Sekunden, die Reaktionstemperatur 55 - 100°C. Die optimale Abstimmung dieser Parameter hängt zwar u.a. vom jeweiligen Polyisocyanat und dem basischen Katalysator ab und ist durch Testversuche bestimmbar. Infolge der komplexen Natur des Systems aus Polyisocyanat und den verwendeten hohen Konzentrationen basischer Katalysatoren bzw. organischer Metallverbindungen sind jedoch Zusammenhänge zwischen den genannten beiden Parametern nicht ohne weitere erkennbar.

Die Bedingungen in der zweiten Mischstufe, in welcher das Aminoplastvorkondensat und der saure Katalysator getrennt voneinander zudosiert werden, sind weniger kritisch. Die Verweilzeiten des dort hergestellten schaumfähige Reaktionsgemisches sind lediglich so zu bemessen, daß eine ausreichend Vermischung der Einsatzstoffe ohne vorherige Aushärtungserscheinunge stattfindet.

Ein weiterer Gegenstand der vorliegenden Erfindung ist eine Vorrichtung zu Durchführung des erfindungsgemäßen Verfahrens, bestehend aus zwei getrennten, jedoch unmittelbar miteinander verbundenen Mischkammern, wobei die für das Verfahren charakteristische Verweilzeit in der ersten Mischstufe durc eine entsprechende Dimensionierung der Summe der freien Querschnitte der Zuleitungen zur ersten Mischstufe zu jener der Verbindung zwischen erster und zweiter Mischstufe, die als Düse ausgebildet ist, erzielt wird.

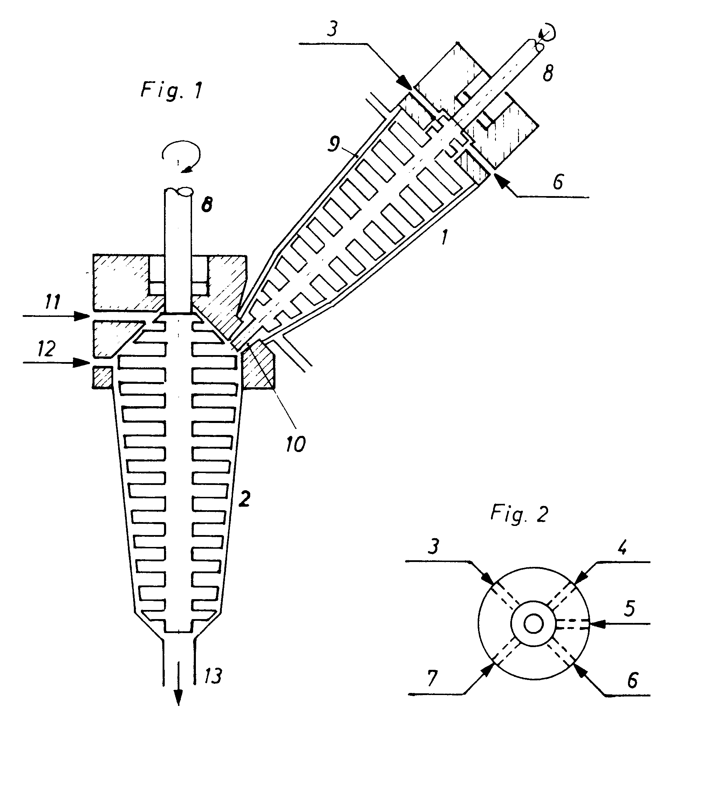

Eine für diesen Zweck besonders geeignete Vorrichtung ist in Fig.1 als Längsschnitt dargestellt. Fig. 2 ist ein Querschnitt durch den oberen Teil der Kammer 1 für die 1.Mischstufe, zu der die Zuleitungen 3, 4, 5 und 6 für das Polyisocyanat den Schaumstabilisator, den oder die basischen Katalysatoren und/oder die organische Metallverbindung führen. Bei 7 wird allenfalls ein Spülmittel zu Reinigungszwecken zugeführt. Diese Mischkammer 1 ist durch den Kühlmantel 9 umgeben und endet in der Düse 10, durch die das in dieser Kammer gebildete Voraddukt unmittelbar in die Mischkammer 2 der zweiten Stufe übergeführt wird. Der Querschnitt der Düse 10 ist so dimensioniert, daß er sich an seiner engsten Stelle zur Summe der freien Querschnitte der Zuleitungen 3, 4, 5 und 6 wie 0,3 -0,9 : 1 verhält. Durch entsprechende Abstimmung dieser Querschnitte innerhalb des erfindungsgemäßen Bereiches wird die gewünschte Verweilzeit innerhalb der erfindungsgemäßen Grenzen eingehalten. 8 sind die Stachelrührer, mit denen die Mischkammer 1 und 2 versehen sind. Die Zuleitung 11 dient der Zuführung des Aminoplastvorkondensates und die Zuleitung 12 der des sauren Katalysators. Bei 13 wird das schaumfähige Reaktionsgemisch ausgetragen.

Die folgenden Beispiele sollen das erfindungsgemäße Verfahren näher erläutern.

Beispiel 1:

In die Mischkammer 1, versehen mit einem mit 3.000 Umdrehungen pro Minut arbeitenden Stachelrührer 8, werden stündlich die nachstehend angeführte Komponenten für die Herstellung des Voradduktes eingeleitet:

90,6 kg rohes Diphenylmethandiisocyanat durch die Zuleitung 3, 5,43 kg Sil konöl als Schaumstabilisator durch die Zuleitung 4 sowie 7,24 kg Triäthano amin und 0,91 kg Dimethyläthanolamin (insgesamt 9,0 Gew.% bezogen auf da Polyisocyanat) durch die Zuleitungen 5 und 6.

Der über den Kühlmantel 10 auf 87°C wassergekühlte, intensiv vermisch Inhalt verläßt nach einer Verweilzeit von 3 Sekunden die Mischkammer 1 u tritt durch die Düse 10 in die unmittelbar anschließende Mischkammer 2 ei Dort werden dem flüssigen Voraddukt unter Rührung mit einem Stachelrühr 8 mit 3.000 Umdrehungen pro Minute über die Zuleitungen 11 und 12 362,3 wäßrige Harnstoff-Formaldehyd-Vorkondensatlösung mit einem Feststoffg halt von 90 % und 9,6 kg Benzoylchlorid zugegeben. Das schäumfähi Gemisch verläßt nach einer Verweilzeit von 1 Sekunde durch die Bohrung die Mischkammer 2.

Nach einer Steigzeit von 2 Minuten erhält man einen Schaumstoff mit eine Raumgewicht von 18 kg/m$^3$.

Beispiel 2:

Wie unter Beispiel 1 beschrieben, wurden folgende, teilweise von Beispiel abweichende Mengen in die Mischkammer 1 eingeführt:

90,6 kg Diphenylmethandiisocyanat
5,43 kg Silikonöl
7,55 kg Triäthanolamin
0,18 kg Dimethyläthanolamin
Verweilzeit: 3 Sekunden
Temperatur des Voradduktes vor Eintritt in die Mischkammer 2: 82°C.

In die Mischkammer 2 wurde das Voraddukt mit 362,3 kg Harnstoff-Formal

0025486

hyd-Vorkondensatlösung mit einem Feststoffgehalt von 90 % und 10,14 kg Benzoylchlorid vermischt. Das auf das Transportband der Blockschäumanlage aufgetragene, schaumfähige Gemisch expandierte innerhalb von zwei Minuten. Das Raumgewicht des entstandenen Schaumstoffes betrug 25 kg/m³, die Schaumstruktur war wiederum gleichmäßig feinzellig.

Beispiel 3:

Wie unter Beispiel 1 beschrieben, wurden folgende, teilweise von Beispiel 1 abweichende Mengen in die Mischkammer 1 eingeführt:

98,2 kg Diphenylmethandiisocyanat
5,43 kg Silikonöl
7,58 kg Triäthanolamin
Verweilzeit: 3,5 Sekunden
Temperatur des Voradduktes vor Eintritt in die Mischkammer 2 : 85°C.

In der Mischkammer 2 wurde das Voraddukt mit 367,2 kg Harnstoff-Formaldehyd-Vorkondensatlösung mit einem Feststoffgehalt von 90 % und 8,1 kg Benzoylchlorid vermischt.

Das auf das Transportband der Blockschäumanlage aufgetragene, schäumfähige Gemisch expandierte innerhalb von 2 Minuten. Das Raumgewicht des entstandenen Schaumstoffes betrug 32 kg/m³, die Schaumstruktur war wiederum gleichmäßig feinzellig.

Patentansprüche:

1. Verfahren zur kontinuierlichen Herstellung von Schaumkunststoffen mit verbessertem Brandverhalten durch Kondensation von wasserhältigen Aminoplastvorkondensaten und deren Vorstufen mit mindestens bifunktionellen organischen Isocyanaten in Gegenwart von Säuren zur Härtung der Aminoplastvorkondensate und organischen Aminen und gegebenenfalls organischen Metallverbindungen zur Katalyse der Reaktion des Polyisocyanates mit Wasser und den Hydroxylgruppen der im Reaktionsgemisch vorhandenen organischen Verbindungen, wobei ein wasserlösliches Aminoplastvorkondensat bzw. dessen Vorstufen in wässeriger Lösung gleichzeitig mit, aber getrennt von den sauren Härtungskatalysatoren, dem Polyisocyanat zugesetzt wird, dem vorher das Amin und gegebenenfalls die organische Metallverbindung zugesetzt worden ist, wobei das Polyisocyanat im Verhältnis zum Wasser in einer Menge zugegen ist, die gleichzeitig eine Vernetzung mit den Methylolgruppen des Aminoplastvorkondensates bzw. desser Vorstufen gestattet, dadurch gekennzeichnet, daß in einer ersten Mischstufe der basische Katalysator und gegebenenfalls die organische Metallverbindung in Mengen von 4 - 14 Gew.%, bezogen auf die Polyisocyanatmenge dieser zugesetzt wird, wobei die Verweilzeiten des zwischen dem Katalysator und dem organischen Polyisocyanat sich bildenden Voradduktes in der ersten Mischstufe 1 bis 8 Sekunden bei Reaktionstemperaturen von 40 - 130°C betragen, worauf diesem nach unmittelbarer Überführung in die anschließende zweite Mischstufe das Aminoplastvorkondensat und der saure Katalysator zudosiert werden, worauf das schaumfähige Reaktionsgemisch kontinuierlich ausgetragen wird.

2. Verfahren nach Anspruch 1, dadurch gekennzeichnet, daß die dem Isocyana zugesetzte Katalysatormenge 6 - 12 Gew.% beträgt.

3. Verfahren nach den Ansprüchen 1 und 2, dadurch gekennzeichnet, daß di Verweilzeiten des zwischen dem Katalysator und dem Polyisocyanat gebi deten Voradduktes in der ersten Mischstufe 1 - 5 Sekunden betragen

4. Verfahren nach den Ansprüchen 1 bis 3, dadurch gekennzeichnet, daß die Reaktionstemperatur in der ersten Mischstufe 55 - 100°C beträgt.

5. Vorrichtung zur Durchführung des Verfahrens gemäß den Ansprüchen 1 bis 4, gekennzeichnet durch eine Mischkammer (1) für die Mischung des Polyisocyanates mit dem basischen Katalysator und/oder der organischen Metallverbindung mit den Zuleitungen (3), (4), (5) und (6) für das Polyisocyanat, den Schaumstabilisator, die basischen Katalysatoren und/oder die organische Metallverbindung sowie das Spülmittel (7), einen die Mischkammer (1) umgebenden Kühlmantel (9) mit Zu- und Ablauf und einer Düse (10), unmittelbar mündend in die Mischkammer (2) mit den Zuleitungen (11) und (12) für das Aminoplastvorkondensat und den sauren Katalysator, der Bohrung (13) für die kontinuierliche Austragung des schaumfähigen Reaktionsgemisches aus der Mischkammer (2) sowie den beiden Stachelrührern (8), wobei der freie Querschnitt der Düse (10) sich an seiner engsten Stelle zur Summe der freien Querschnitte der Zuleitungen (3), (4), (5) und (6) wie 0,3 - 0,9 : 1 verhält.

O.Z.678
19.6.1980

002548

Fig. 1

Fig. 2

| | **EINSCHLÄGIGE DOKUMENTE** | | **KLASSIFIKATION DER ANMELDUNG (Int. Cl.³)** |
|---|---|---|---|
| jorie | Kennzeichnung des Dokuments mit Angabe, soweit erforderlich, der maßgeblichen Teile | betrifft Anspruch | |
| | DE - A1 - 2 732 105 (LENTIA) (2501-1979) + Ansprüche; Beispiel 1 + -- | 1,2 | C 08 G 18/54 C 08 G 18/14 |
| | GB - A - 1 029 963 (INTUBLOC) + Gesamt + ---- | 1 | |

**RECHERCHIERTE SACHGEBIETE (Int. Cl.³)**

C 08 G 18/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| herchenort | Abschlußdatum der Recherche | Prüfer |
|---|---|---|
| WIEN | 03-12-1980 | WEIGERSTORFER |

form 1503.1  06.78